Europäisches Patentamt

European Patent Office

Office européen des brevets

(19)

(11) Veröffentlichungsnummer : **0 387 853 B1**

(12) **EUROPÄISCHE PATENTSCHRIFT**

(45) Veröffentlichungstag der Patentschrift :
**04.03.92 Patentblatt 92/10**

(51) Int. Cl.$^5$ : **C02F 1/58,** C02F 1/52, **C11D 1/62**

(21) Anmeldenummer : **90104844.7**

(22) Anmeldetag : **14.03.90**

(54) **Verfahren zur Entfernung von Arsen und/oder Antimon aus Lösungen, die Arsen und/oder Antimon als Anionische Fluorokomplexe enthalten.**

(30) Priorität : **15.03.89 DE 3908491**

(43) Veröffentlichungstag der Anmeldung :
**19.09.90 Patentblatt 90/38**

(45) Bekanntmachung des Hinweises auf die
Patenterteilung :
**04.03.92 Patentblatt 92/10**

(84) Benannte Vertragsstaaten :
**AT BE CH DE ES FR GB IT LI NL SE**

(56) Entgegenhaltungen :
**DE-A- 3 633 066**
**FR-A- 2 299 273**
**CHEMCIAL ABSTRACTS, Band 79, Nr. 18, 5.**
**November 1973, Seite 459, Zusammenfassung**
**Nr. 111411k, Columbus, Ohio, US; A. NADJAFI:**
**"Precipitation of the alkali metals with hexa-**
**fluorophosphate and hexafluoroarsenate", &**
**MIKROCHIM. ACTA 1973, (5), 689-96**
**CHEMICAL ABSTRACTS, Band 102, Nr. 4, 28.**
**Januar 1985, Seite 935, Zusammenfassung Nr.**
**38851r, Columbus, Ohio, US; G. ZHANG et al.:**
**"Benzyldimethyltetradecylammonium chlo-**
**ride as precipitation titrant for tetrafluorobora-**
**te", & FENXI HUAXUE 1984, 12(7), 615-18**

(73) Patentinhaber :
**FRAUNHOFER-GESELLSCHAFT ZUR**
**FÖRDERUNG DER ANGEWANDTEN**
**FORSCHUNG E.V.**
**Leonrodstrasse 54**
**W-8000 München 19 (DE)**

(72) Erfinder : **Kaiser, Alfred, Dr.**
**Am Rosengarten 18**
**W-8702 Kist (DE)**
Erfinder : **Kappel, Jürgen, Dr.**
**Winterleitenweg 41a**
**W-8700 Würzburg (DE)**
Erfinder : **Bischof, Johannes**
**Goethestrasse 13**
**W-6972 Tauberbischofsheim (DE)**
Erfinder : **Hutter, Frank, Dr.**
**Randersackerer Strasse 81**
**W-8700 Würzburg (DE)**

(74) Vertreter : **Barz, Peter, Dr. et al**
**Patentanwälte Dipl.-Ing. G. Dannenberg Dr. P.**
**Weinhold, Dr. D. Gudel Dipl.-Ing. S. Schubert,**
**Dr. P. Barz Siegfriedstrasse 8**
**W-8000 München 40 (DE)**

EP 0 387 853 B1

**Beschreibung**

Die Erfindung betrifft ein Verfahren zum Entfernen von Arsen und/oder Antimon aus Lösungen, die Arsen und/oder Antimon als anionische Fluorokomplexe enthalten, insbesondere aus Säurepolitur-Betriebswässern, Spülwässern und Neutralisationswässern der Bleikristall- und Kristallglasindustrie.

Bei der Bleikristallglas- und Kristallglasproduktion wird Arsentrioxid (As$_2$O$_3$) und/oder Antimontrioxid (Sb$_2$O$_3$) der Glasschmelze als Läutermittel zugesetzt. Der Massenanteil am Gemengeversatz liegt in der Regel bei weniger als 1 %. Ein Teil des eingesetzten Arsens oder Antimons entweicht aus der Glasschmelze als gasförmige Arsen- oder Antimonverbindungen; ein Massenanteil von ca. 0.2 % verbleibt aber fest in der Glasmatrix eingebunden. Das Arsen oder Antimon kann in Veredelungsprozessen, bei denen die Glasoberfläche bearbeitet wird, zum Teil wieder freigesetzt werden. Dies geschieht zum Beispiel in der Säurepolitur, bei der Glas mit einer Mischung, die 60 bis 70 Masseprozent Schwefelsäure, 0,5 bis 10 Masseprozent Flußsäure und den Rest Wasser enthält, behandelt und zum Teil wieder aufgelöst wird.

Die Säurepoliturabwässer enthalten bis zu 450 mg/l Arsen und/oder Antimon, die wegen des hohen Fluoridgehalts dieser stark sauren Abwässer zumindest zu einem Teil als Fluoroarsenat bzw. Fluoroantimonat vorliegen. Zur Bildung dieser Komplexanionen siehe D. Naumann: Fluor und Fluorverbindungen; in: A. Schneider (Hrsg.): Spezielle anorganische Chemie in Einzeldarstellungen, Bd. 2, S. 64-75, Dr. Dietrich Steinkopff Verlag, Darmstadt, 1980. Diese Ionen werden auch in Spülwässer, mit denen die Glasgegenstände nach der Säurepolitur gespült werden, verschleppt.

Insbesondere die Fluoroarsenate werden kaum hydrolysiert, siehe W. L. Lockhart et al., J. inorg. nucl. Chem. Bd. 31 (1969), S. 407 - 414. Bei der herkömmlichen Fällung der Oxo-anionen des Arsens und Antimons als Eisen(III)arsenit/at bzw. -antimonit/at oder von Arsen und Antimon als Sulfide werden sie nicht mitgefällt, weshalb mit diesen Methoden bei den genannten Abwässern nur Abreinigungsgrade ([Anfangskonzentration-Endkonzentration]/Anfangskonzentration) von 0 - 10 % erreicht werden. In der Novellierung der 41. Abwasserverwaltungsvorschrift für saure fluoridhaltige Abwässer sind im Gegensatz zu nicht fluoridhaltigen Abwässern aus dem Bereich der Schleifereinur deshalb keine Grenzwerte für Arsen und Antimon genannt, weil für diese schwer fällbaren Anionen noch keine Vermeidungstechnologie existiert. Für die nächste Novellierung ist aber ein Grenzwert von 0,3 mg Arsen bzw. Antimon pro Liter vorgesehen.

Auch die großvolumigen, feuchten Neutralisationsschlämme dieser Abwässer enthalten leicht auszulaugende Arsen und/oder Antimonverbindungen, deren Konzentrationen so hoch sind, daß eine teure Entsorgung als Sondermüll erforderlich ist. Es besteht also in diesem Bereich sowohl aus ökologischer als auch aus ökonomischer Sicht ein dringender Bedarf an einem Verfahren zur Entfernung von Arsen und Antimon aus fluoridhaltigen Abwässern.

In Chemical Abstracts, Band 79, 1973, Seite 459, Nr. 111411k, wird über die Löslichkeit und Trennung von Cäsium-, Kalium- und Rubidiumhexafluorophosphat und -arsenat berichtet.

Aufgabe der Erfindung ist es, ein Verfahren zum Abtrennen von Arsen und/oder Antimon aus Lösungen, die Arsen und/oder Antimon als anionische Fluorokomplexe enthalten, zu schaffen, das wirtschaftlich durchführbar ist und keine neuen Umwelt- bzw. Abwasserprobleme verursacht.

Gegenstand der Erfindung ist ein Verfahren zum Entfernen von Arsen und/oder Antimon aus Lösungen, die Arsen und/oder Antimon als anionische Fluorokomplexe enthalten, insbesondere aus Säurepolitur-Betriebswässern und Neutralisationswässern der Bleikristall- und Kristallglasindustrie, das dadurch gekennzeichnet ist, daß man der Lösung eine oder mehrere wasserlösliche quartäre Ammonium- oder Phosphoniumverbindungen zudosiert, wobei durch diese, die üblicherweise als kationische Tenside, d. h. gerade nicht als Fällungsreagenzien, eingesetzt werden, überraschenderweise die negativen Fluoroarsenat- und -antimonationen ausgefällt werden, und die ausgefällten Feststoffe abtrennt.

Wasserlöslich bedeutet in diesem Zusammenhang, daß die Verbindungen im wesentlichen molekulardispers im Wasser verteilt sind oder eine kolloidähnliche Dispersion bilden, die eine Fällungreaktion gestattet.

Als Fällungsmittel werden vorzugsweise eine oder mehrere wasserlösliche Verbindungen der Formel

$$MR_4^+ \, X^-$$

verwendet, worin
M Stickstoff oder Phosphor ist,
die Reste R gleich oder verschieden sind und geradkettiges
oder verzweigtes Alkyl mit 1 bis 30 C-Atomen, geradkettiges
oder verzweigtes Alkenyl mit 2 bis 30 C-Atomen, Cycloalkyl,
gegebenenfalls Alkyl-substituiertes Aryl oder
gegebenenfalls Alkyl-substituiertes Arylalkyl bedeuten
und
X ein Anion ist, vorzugsweise ein Halogenid- (z. B. Chlorid oder Bromid), Hydrogensulfat-, Methylsulfat-, Sulfat- oder Hydroxidanion.

In Hinblick auf die erforderliche Wasserlöslichkeit dieser Verbindungen sind im allgemeinen mindestens 2 Reste R eine Alkylgruppe mit 1 bis 4 C-Atomen (vorzugsweise eine Methylgruppe), wenn ein Rest R eine Alkyl- oder Alkenylgruppe mit mehr als 8 C-Atomen aufweist.

Beispiele für geradkettiges oder verzweigtes Alkyl sind Methyl, Ethyl, Isopropyl, t-Butyl, Capryl ($C_8$), Palmityl ($C_{16}$) und Melissyl ($C_{30}$). Bevorzugte Alkylreste enthalten 1 bis 24 C-Atome.

Beispiele für geradkettige oder verzweigte Alkenyle sind Ethenyl, Vinyl, iso-Butenyl, Palmitoleinyl ($C_{16}$) und Linolyl ($C_{18}$). Bevorzugte Alkenylreste enthalten 2 bis 12 C-Atome.

Beispiele für Cycloalkyl sind Cyclopropyl, Cyclopentyl, Cyclohexyl und Decalinyl. Bevorzugte Cycloalkylreste enthalten 5 bis 10 C-Atome.

Beispiele für Aryl sind Phenyl, Naphthyl, Phenanthryl ($C_{14}$) und Perylyl ($C_{22}$). Bevorzugte Arylreste enthalten 6 bis 14 C-Atome. Gegebenenfalls Alkyl-substituiertes Aryl bedeutet, daß die wie vorher definierte Arylreste mit einem oder mehreren wie oben definierten Alkylresten substituiert sind, vorzugsweise mit Alkylresten von 1 bis 6 C-Atomen.

Arylalkyl ist eine wie oben definierte Alkylgruppe, die mit einem oder mehreren wie oben definierten Arylresten substituiert ist, z. B. Benzyl, Naphthylpropyl, Phenanthrylcapryl. Bevorzugt sind Arylreste mit 6 bis 14 C-Atomen und Alkylreste mit 1 bis 6 C-Atomen. Gegebenenfalls Alkyl-substituiertes Arylalkyl bedeutet, daß die wie vorher definierten Arylreste der Arylalkylgruppen gegebenenfalls mit einem oder mehreren wie oben definierten Alkylresten substituiert sind, vorzugsweise mit Alkylresten von 1 bis 6 C-Atomen.

In einer weiteren Ausführungsform betrifft die Erfindung ein zweistufiges Verfahren, bei dem das oben beschrieben Verfahren mit einem herkömmlichen Fällungsverfahren gekoppelt wird, das Arsen- und/oder Antimon-Oxoanionen aus Abwässern entfernt. Solche Verfahren sind zum Beispiel in DE-A-23 42 729, DE-A-36 33 066, EP-A-139 622 , DD-C-54 950 und JP-A-61-68191 beschrieben.

Im erfindungsgemäßen Verfahren wird dem zu behandelnden Abwasser das oben beschrieben Fällungsmittel zudosiert. Dies kann in fester Form, üblicherweise jedoch in Form verdünnter oder konzentrierter wässriger oder alkoholischer Lösung erfolgen. Die Dosierung richtet sich im Prinzip nach dem Anteil an 5-wertigem Fluoroarsenat und/oder -antimonat im Abwasser, der wie folgt ermittelt wird: Der Gesamtarsen- und/oder -antimongehalt einer Probe wird mittels ICP-AES (Induced Coupled-Plasma Atom Emission Spectroscopy, DIN 38 406, Teil 22, März 1988) bestimmt, der Anteil an Oxoanionen des Arsens und/oder Antimons kann als Arsin bzw. Stilbin quantitativ nachgewiesen werden (DIN 38405; Teil 12, Juni 1981 und DIN 38 405, Teil 18, September 1985). Die Differenz der beiden Werte ist der Anteil an Fluoroarsenat und/oder -antimonat in der Probe. Die Zudosierung erfolgt dann mit einer bezüglich der so ermittelten Konzentration mindestens stöchiometrischen Menge, vorzugsweise mit einer 1.2- bis 2-fachen stöchiometrischen Menge und besonders bevorzugt mit einer 1.5-fachen stöchiometrische Menge des Fällungsmittels.

Da in der Praxis die jeweilige Bestimmung des Anteils an Fluoroarsenat und/oder -antimonat aufwendig ist, kann natürlich auch eine mindestens stöchiometrische Menge, vorzugsweise eine 1.2- bis 2-fache stöchiometrische Menge und besonders bevorzugt eine 1.5-fache stöchiometrische Menge in Bezug auf einen Erfahrungshöchstwert dieser beiden Ionen oder, aus Sicherheitsgründen bevorzugt, des Gesamt-Arsens und/oder -Antimons eingesetzt werden.

Die Zudosierung erfolgt bei der Temperatur, die die Abwässer durch äußere Gegebenheiten aufweisen. Sie ist im gesamten pH-Bereich möglich, z. B. kann zum stark sauren Säurepoliturabwasser oder zu einem alkalischen Neutralisationswasser zudosiert werden.

Bei Säurepoliturabwässern erfolgt die Zudosierung des Fällungsmittels vorteilhafterweise vor dessen Neutralisation, also in einem pH-Bereich < 2, vorzugsweise bei $pH \leqq 0$.

Die so erhaltenen, kleinvolumigen, schwerlöslichen, stark Arsen-haltigen Niederschläge werden mit einer beliebigen bekannten Methode abgetrennt, z.B. durch Abfiltrieren und Auspressen des Filterkuchens, durch Absetzenlassen und Abdekantieren oder durch Abzentrifugieren, und als Sondermüll deponiert. Abwässer und Schlämme aus nachfolgenden Reinigungsstufen enthalten dann kein gelöstes bzw. leicht auslaugbares Fluoroarsenat und/oder -antimonat mehr und müssen in der Regel nicht als Sondermüll behandelt werden.

Die erreichbaren Abreinigungsgrade in Bezug auf die Gesamt-Arsen- und/oder -Antimonkonzentration hängen bei einer alleinigen Behandlung mit den erfindungsgemäßen Fällungsmitteln vom Anteil an Oxoanionen des Arsens und/oder Antimons ab, da diese nicht mitgefällt werden. Falls dieser gering ist, können damit Abreinigungsgrade bis zu mehr als 99% erreicht werden.

Bei der 2-stufigen Verfahrensweise, die das Verfahren zur Fällung von Fluoroarsenat und -antimonat mit einem herkömmlichen Verfahren zur Fällung von Oxoanionen des Arsens und Antimons koppelt, fällt man vorteilhafterweise zuerst die Fluoroarsenate und -antimonate im pH-Bereich < 2, bevorzugt bei $pH \leqq 0$. Der kleinvolumige Fällungsschlamm wird mit einer herkömmlichen Methode abgetrennt als Sondermüll entsorgt. Dann wird in einem pH-Bereich oberhalb von 2, bevorzugt im pH-Bereich von 2 bis 4 und insbesondere von 2 bis 3, nach einer der oben erwähnten Methoden, vorzugsweise mit einer Eisen(III)-Verbindung wie Eisen(III)sulfat, der Anteil an Oxoanionen des Arsens bzw. Antimons gefällt. Dieser Niederschlag enthält nur noch schwerlösliches Eisen(III)arsenit/antimonit und - arsenat/antimonat. Im Anschluß an die 2-stufige Arsen/Antimon-Ausfällung können natürlich weitere Verfahren, wie Neutralisation und Bleifällung (z. B. mit $CO_2$), durchgeführt werden.

In einer weiteren Variante des 2-stufigen Verfahrens neutralisiert man zunächst nach der Fällung der Fluoroarsenate und/oder -antimonate das Abwasser, vorzugsweise auf einen pH-Wert von 6.5 bis 9.5, und führt erst anschließend die Fällung der Oxoanionen des Arsens und/oder Antimons mit Hilfe von Eisen(III)salzen durch. Das so gereinigte Wasser kann dann ganz oder teilweise im Kreislauf geführt und zum Auswaschen eventuell bei der Neutralisation mitgefällter Arsen- und/oder Antimonverbindungen aus dem Neutralisationsschlamm verwendet werden. Diese Variante bietet sich als Lösung für solche Betriebe an, bei denen aus Platzgründen keine 2-stufige Reinigungsanlage zwischen Säurepolitur und bestehender Neutralisation installiert werden kann.

Mit diesem 2-stufigen Fällungsverfahren sind sehr hohe Abreinigungsgrade bezüglich Gesamt-Arsen und-/oder -Antimon erreichbar. Die Restkonzentrationen liegen unter 0.5 mg/l, in den günstigsten Fällen um 0.05 mg/l.

Ein weiterer Vorteil der hier beschriebenen Abwasserbehandlungsmethode ist, daß die Fällungsreaktionen rasch ablaufen. Daraus ergeben sich kurze Verweilzeiten des Abwassers in den Reaktions- und Absetzbecken, wodurch deren Abmessungen klein gehalten werden können. Daher lassen sich die notwendigen Installationen in den meisten Fällen problemlos in bestehende Anlagen integrieren.

Mit dem erfindungsgemäßen Verfahren wird also erstmals eine effiziente Reinigung von Fluoroarsenat- und/oder -antimonat-haltigen Abwässern erreicht, die wirtschaftlich vorteilhaft ist, da die erfindungsgemäßen Fällungsmittel zum großen Teil preisgünstige, in großem Maßstab hergestellte quartäre kationische Tenside darstellen.

In den folgenden Beispielen wird die Erfindung noch näher erläutert.

**Beispiel 1**

Tabelle 1 gibt einen vergleichenden Überblick über die Fällungseffizienz einiger repräsentativer erfindungsgemäßer Fällungsmittel in verschiedenen Arsen- und Antimonhaltigen Proben.

Die anfänglichen Gesamtkonzentrationen sowie die Restkonzentrationen wurden mit ICP-AES ermittelt. Die Fällungsmittel wurden in 1.5-facher stöchiometrischer Menge bezüglich der anfänglichen Gesamtkonzentration an Arsen und/oder Antimon in fester Form oder in Form einer wäßrigen oder alkoholischen Lösung zudosiert. Der pH-Wert war bei den Versuchen A, B und C annähernd neutral, bei den Versuchen D und E stark sauer (pH $\leq$ 0). Nach Niederschlagsbildung wurde die Klarphase abdekantiert.

Die Anteile an Oxoanionen des Arsens und Antimons wurden nicht bestimmt und waren somit, außer bei $KAsF_6$, wo sie praktisch gleich Null sind, nicht bekannt. Die Restkonzentrationen bei $KAsF_6$ lassen den Schluß zu, daß die gemessene Gesamt-Restkonzentration bei den übrigen zu reinigenden Lösungen überwiegend bis praktisch ausschließlich auf Oxoanionen des Arsens und/oder Antimons zurückzuführen ist. Bezüglich der Fluorarsenat- und/oder -antimonatkonzentration wird also ein hoher Abreinigungsgrad [(Ausgangskonzentration - Endkonzentration)/Ausgangskonzentration] erreicht.

EP 0 387 853 B1

T A B E L L E   1

Fällungsreagenzien

| Nr. | Handelsname | Hersteller | chemische Bezeichnung | Alkylreste |
|---|---|---|---|---|
| 1 | - | | Tetraphenylphosphoniumbromid | |
| 2 | - | | Tetrabutylammoniumhydrogensulfat | |
| 3 | Noramium M2 SH 100® | Ceca | Di(hydriertes Talgalkyl)dimethylammoniumchlorid | 64% $C_{18}$, 31% $C_{16}$, 4% $C_{14}$, 1% $C_{12}$ |
| 4 | Barquat MB 80® | Lonza | Alkyldimethylbenzylammoniumchlorid | 10% $C_{16}$, 50% $C_{14}$, 40% $C_{12}$ |
| 5 | Barquat 4280® | Lonza | Alkyldimethylethylbenzylammoniumchlorid | 5% $C_{18}$, 30% $C_{16}$, 60% $C_{14}$, 5% $C_{12}$ |
| 6 | Bardac 22® | Lonza | Didecyldimethylammoniumchlorid | |
| 7 | Dodigen 1383® | Hoechst | Hexadecyltrimethylammoniumchlorid | |
| 8 | Dodigen 5594® | Hoechst | Sojaalkyltrimethylammoniumchlorid | 83% $C_{18}$, 15% $C_{16}$, 2% $C_{14}$ |
| 9 | Dodigen 1490® | Hoechst | Dicocosalkyldimethylammoniumchlorid | 10% $C_{16}$, 23% $C_{14}$, 57% $C_{12}$ |

| Probenbezeichnung | | Ausgangskonzentration an Antimon (mg/l) | Restkonzentration in mg/l (Abreinigungsgrad in %) bei Fällungsreagenz Nr. | | |
|---|---|---|---|---|---|
| | | | 1 | 2 | 3 |
| Altsäure | E | 7.44 | 0 (100) | 0.83 (88.8) | 0.26 (96.5) |

EP 0 387 853 B1

T A B E L L E   1 (Fortsetzung)

| Proben-bezeichnung | | Ausgangskon-zentration an Arsen (mg/l) | Restkonzentration in mg/l (Abreinigungsgrad in %) bei Fällungsreagenz Nr. | | | | | | | | |
|---|---|---|---|---|---|---|---|---|---|---|---|
| | | | 1 | 2 | 3 | 4 | 5 | 6 | 7 | 8 | 9 |
| KAs F$_6$ | A | 98.7 | 0.55 (99.4) | 14.9 (84.9) | 1.0 (99.0) | – | – | – | – | – | – |
| Neutrali-sations-wasser | B | 79.0 | 0.18 (99.7) | 18.0 (77.2) | 4.8 (93.9) | – | – | – | – | – | – |
| | | 4.85 | – | – | – | 1.06 (78.1) | 0.56 (88.5) | 0.62 (87.2) | 0.18 (96.3) | 0.32 (93.4) | 0.19 (96.1) |
| saure Spül-wässer | C | 17.86 | | – | – | 5.67 (68.3) | 4.10 (77.0) | 7.13 (60.1) | 4.44 (75.1) | 5.05 (71.7) | 4.76 (73.3) |
| Alt-säure | D | 450.0 | – | – | 106 (76.4) | – | – | – | – | – | – |
| | | 461.4 | 40.8 (91.2) | 28.7 (93.8) | 90.2 (80.4) | – | – | – | –. | – | – |

**Beispiel 2**

In Tabelle 2 sind die Ergebnisse der Ausführungsform des erfinderischen Verfahrens dargestellt, in der bei verschiedenen Arsen- und Antimon-haltigen Lösungen zusätzlich zu der in Beispiel 1 aufgeführten Fällung eine weitere Fällung mit Eisen(III)sulfat durchgeführt wurde.

Die anfänglichen Gesamtkonzentrationen sowie die Restkonzentrationen wurden mit ICP-AES ermittelt. Das Fällungsmittel für die Fluoroarsenat- und -antimonationen war die Verbindung 3 aus Beispiel 1. Es wurde in 1.5-facher stöchiometrischer Menge bezüglich der anfänglichen Gesamtkonzentration an Arsen und/oder Antimon als Feststoff zudosiert. Der pH-Wert war bei den Versuchen F und G 7 bis 8, bei den Versuchen H, I und J stark sauer (pH $\leqq$ 0). Nach Niederschlagsbildung wurde die Klarphase abdekantiert.

Das Fällungsmittel für die Arsen- und/oder Antimon-Oxoanionen war Eisen(III)sulfat [$Fe_2(SO_4)_3$], das in 50-facher stöchiometrischer Menge in Bezug auf die Gesamt-Ausgangskonzentration an Arsen und/oder Antimon in Form einer konzentrierten wäßrigen Lösung im Anschluß an die Fällung mit Verbindung 3 bei einem pH Wert von 7 bis 8 (Versuche F und G) bzw. 2 bis 4 (Versuche H, I, und J) zudosiert wurde. Nach Niederschlagsbildung wurde filtriert.

EP 0 387 853 B1

T A B E L L E   2

Kombinierte Fällung mit Noramium M2 SH 100[R] und Eisen(III)sulfat

| Proben-bezeichnung | | Ausgangskonzentration an Arsen in mg/l und an Antimon in mg/l | Restkonzentration in mg/l nach der Fällung mit Noramium M2 SH 100 | (Abreinigungsgrad in %) | mit Eisen(III)sulfat | |
|---|---|---|---|---|---|---|
| Neutralisa-tionswasser | F | As: 0.66 +Sb: 1.43 | 0.05 +1.28 | (92.4) (10.5) | 0.05 +0.05 | (92.4) (96.5) |
| | G | As: 0.36 | 0.15 | (58.3) | 0.04 | (88.9) |
| saures Spülwasser | H | As: 3.23 | 1.48 | (54.2) | 0.49 | (84.8) |
| | I | As: 1.77 | 1.39 | (21.5) | 0.22 | (87.6) |
| | J | As: 0.63 | 0.55 | (12.7) | 0.06 | (90.5) |

**Patentansprüche**

1. Verfahren zum Entfernen von Arsen und/oder Antimon aus Lösungen, die Arsen und/oder Antimon als anionische Fluorokomplexe enthalten, dadurch gekennzeichnet, daß man der Lösung eine oder mehrere wasserlösliche quartäre Ammonium- oder Phosphoniumverbindungen als Fällungsmittel zudosiert und die ausgefällten Feststoffe abtrennt.

2. Verfahren nach Anspruch 1, dadurch gekennzeichnet, daß man als Fällungsmittel eine oder mehrere wasserlösliche Verbindungen der Formel

$$MR_4^+ \, X^-$$

verwendet, worin
M Stickstoff oder Phosphor ist,
die Reste R gleich oder verschieden sind und geradkettiges oder verzweigtes Alkyl mit 1 bis 30 C-Atomen, geradkettiges oder verzweigtes Alkenyl mit 2 bis 30 C-Atomen, Cycloalkyl, gegebenenfalls Alkyl-substituiertes Aryl oder gegebenenfalls Alkyl-substituiertes Arylalkyl bedeuten und
X ein Anion ist.

3. Verfahren nach Anspruch 1 oder 2, dadurch gekennzeichnet, daß man das Fällungsmittel in mindestens stöchiometrischer Menge, vorzugsweise in 1.2- bis 2-facher stöchiometrischer Menge in Bezug auf die Gesamt-Arsen- und/oder -Antimonkonzentration oder die Konzentration an deren fluorkomplexierten Anionen zudosiert.

4. Verfahren nach einem der Ansprüche 1 bis 3, dadurch gekennzeichnet, daß es bei einem pH-Wert < 2 durchgeführt wird.

5. Verfahren nach einem der Ansprüche 1 bis 4, dadurch gekennzeichnet, daß man die Fällung mit einer weiteren Fällung koppelt, in der Arsen- und/oder Antimon-Oxoanionen nach einem beliebigen bekannten Verfahren abgetrennt werden.

6. Verfahren nach Anspruch 5, dadurch gekennzeichnet, daß man als Fällungsmittel in der weiteren Fällungsstufe eine Eisen(III)-Verbindung wie Eisen(III)sulfat verwendet.

7. Verfahren nach Anspruch 5 oder 6, dadurch gekennzeichnet, daß man die weitere Fällungsstufe im Anschluß an die Fällung gemäß einem der Ansprüche 1 bis 4 durchführt.

8. Verfahren nach Anspruch 7, dadurch gekennzeichnet, daß man die Fällungsstufe gemäß einem der Ansprüche 1 bis 4 bei einem pH-Wert < 2 und die weitere Fällungsstufe bei einem pH-Wert über 2, vorzugsweise von 2 bis 3, durchführt.

9. Verfahren nach Anspruch 5 oder 6, dadurch gekennzeichnet, daß man die weitere Fällungstufe im Anschluß an die Neutralisation der nach der ersten Fällungsstufe anfallenden Lösung, vorzugsweise bei einem pH-Wert von 6.5 bis 9.5, durchführt.

10. Verfahren nach Anspruch 9, dadurch gekennzeichnet, daß man das durch dieses Verfahren gereinigte Wasser ganz oder teilweise im Kreislauf führt und zum Auswaschen eventuell bei der Neutralisation mitgefällter Arsen- und/oder Antimonverbindungen aus dem Neutralisationsschlamm verwendet.

**Claims**

1. A process for removing arsenic and/or antimony from solutions containing arsenic and/or antimony as anionic fluoro complexes, wherein one or more water-soluble quaternary ammonium or phosphonium compound(s) are added as precipitating agents, and the precipitated solids are separated.

2. A process according to claim 1, wherein one or more water-soluble compound(s) of the formula

$$MR_4^+ \, X^-$$

are used as precipitating agents, wherein
M is nitrogen or phosphorus;
the radicals R are equal to or different from each other and represent straight-chain or branched alkyl having 1 to 30 carbon atoms, straight-chain or branched alkenyl having 2 to 30 carbon atoms, cycloalkyl, aryl optionally substituted with alkyl or arylalkyl optionally substituted with alkyl; and
X is an anion.

3. A process according to claim 1 or 2, wherein the precipitating agent is added at least in a stoichiometric amount, preferably in 1.2 to 2 times the amount stoichiometrically required, based on the total concentration of arsenic and/or antimony or the concentration of their fluoro-complex anions.

4. A process according to any of claims 1 to 3, wherein said process is carried out at a pH value of < 2.

5. A process according to any of claims 1 to 4, wherein the precipitation is combined with a further precipitation in which arsenic and/or antimony oxo-anions are separated according to methods known per se.

6. A process according to claim 5, wherein, in the further precipitation stage, a ferric compound such as ferric sulfate is used as precipitating agent.

7. A process according to claim 5 or 6, wherein the further precipitation stage is carried out subsequent to the precipitation according to any of claims 1 to 4.

8. A process according to claim 7, wherein the precipitation stage according to any of claims 1 to 4 is implemented at a pH value of < 2, and the further precipitation stage at a pH value of more than 2, preferably of from 2 to 3.

9. A process according to claim 5 or 6, wherein the further precipitation stage is carried out subsequent to the neutralization of the solution resulting from the first precipitation stage, preferably at a pH value of from 6.5 to 9.5.

10. A process according to claim 9, wherein the water purified by this method is recycled completely or in part and is used for elutriating any arsenic and/or antimony compounds possibly co-precipitated during neutralization from the neutralization slurry.

## Revendications

1. Procédé pour éliminer l'arsenic et/ou l'antimoine de solutions contenant de l'arsenic et/ou de l'antimoine sous forme de complexes anioniques fluorés, caractérisé en ce qu'on ajoute par dosage à la solution un ou plusieurs composés d'ammonium ou de phosphonium quaternaire solubles dans l'eau comme précipitant et qu'on sépare les substances solides précipitées.

2. Procédé selon la revendication 1, caractérisé en ce qu'on utilise comme précipitant un ou plusieurs composés solubles dans l'eau de la formule :

$$MR4^+X^-$$

dans laquelle
M est l'azote ou le phosphore,
les restes R sont égaux ou différents et représentent un radical alkyle à chaîne droite ou ramifiée ayant 1 à 30 atomes de carbone, un radical alcényle à chaîne droite ou ramifiée ayant 2 à 30 atomes de carbone, un radical cycloalkyle, le cas échéant un radical aryle substitué par un radical alkyle ou, le cas échéant, un radical arylalkyle substitué par un radical alkyle et X est un anion substitué par un radical alkyle et X est un anion.

3. Procédé selon la revendication 1 ou 2, caractérisé en ce qu'on ajoute le précipitant par dosage au moins en quantité stoechiométrique, de préférence 1,2 à 2 fois en quantité stoechiométrique par rapport à la concentration totale d'arsenic et/ou d'antimoine ou par rapport à la concentration de leurs anions complexes fluorés.

4. Procédé selon l'une des revendications 1 à 3, caractérisé en ce qu'il est mis en oeuvre à une valeur pH < 2.

5. Procédé selon l'une des revendications 1 à 4, caractérisé en ce que la précipitation est couplée avec une autre précipitation, dans laquelle les oxo-anions d'arsenic et/ou d'antimoine sont séparés selon un procédé quelconque connu.

6. Procédé selon la revendication 5, caractérisé en ce qu'on utilise comme précipitant au cours de la phase de précipitation ultérieure un composé de fer (III) tel que du sulfate de fer (III).

7. Procédé selon la revendication 5 ou 6, caractérisé en ce que la phase de précipitation ultérieure est effectuée à la suite de la précipitation réalisée selon l'une des revendications 1 à 4.

8. Procédé selon la revendication 7, caractérisé en ce que la phase de précipitation selon l'une des revendications 1 à 4 est effectuée à une valeur pH < 2 et la phase de précipitation ultérieure à une valeur pH supérieure à 2, de préférence de 2 à 3.

9. Procédé selon la revendication 5 ou 6, caractérisé en ce qu'on effectue la phase ultérieure de précipitation à la suite de la neutralisation de la solution obtenue après la première phase de précipitation, de préférence à une valeur pH de 6,5 à 9,5.

10. Procédé selon la revendication 9, caractérisé en ce que l'eau purifiée par ce procédé est mise en circuit en totalité ou en partie et utilisée pour le lavage des composés d'arsenic et/ou d'antimoine provenant des boues de neutralisation éventuellement précipitées au cours de la neutralisation.